## Europäisches Patentamt
## European Patent Office
## Office européen des brevets

(19)

(11) Veröffentlichungsnummer: **0 247 997**
**B1**

(12) **EUROPÄISCHE PATENTSCHRIFT**

(45) Veröffentlichungstag der Patentschrift: **16.01.91**

(51) Int. Cl.⁵: **H 02 K 24/00, H 01 F 21/06**

(21) Anmeldenummer: **87890115.6**

(22) Anmeldetag: **20.05.87**

(54) **Drehgeber.**

(30) Priorität: **30.05.86 DE 3618175**

(43) Veröffentlichungstag der Anmeldung:
**02.12.87 Patentblatt 87/49**

(45) Bekanntmachung des Hinweises auf die
Patenterteilung:
**16.01.91 Patentblatt 91/03**

(84) Benannte Vertragsstaaten:
**AT CH DE FR GB IT LI SE**

(56) Entgegenhaltungen:
**EP-A-0 214 114**
**FR-A- 453 315**
**FR-A-1 111 737**
**FR-A-1 531 875**
**US-A-2 866 913**
**US-A-4 551 699**

(73) Patentinhaber: **VOEST-ALPINE AUTOMOTIVE**
**Gesellschaft m.b.H.**
**Muldenstrasse 5**
**A-4020 Linz (AT)**

(72) Erfinder: **Ritzinger, Georg, Dipl.-Ing.**
**Kierlingerstrasse 59a**
**A-3400 Klosterneuburg (AT)**

(74) Vertreter: **Matschnig, Franz, Dipl.-Ing.**
**Siebensterngasse 54 Postfach 452**
**A-1071 Wien (AT)**

Courier Press, Leamington Spa, England.

# EP 0 247 997 B1

**Beschreibung**

Die Erfindung bezieht sich auf einen Drehgeber mit einem Stator, der eine Signalspule mit zumindest zwei, um vorgegebene Winkel gegeneinander versetzten Signalwicklungen sowie eine zu der Signalspule konzentrisch angeordnete, zylindrische Erregerspule mit gerader Erregerwicklung aufweist, wobei zumindest einer der Spulen ein Kern aus magnetisch leitfähigem Material zugeordnet ist, und mit einem Rotor, der zumindest ein Paar einander diametral gegenüberliegender Leitstücke aus magnetisch leitfähigem Material aufweist.

Bei einem aus der US—A—2 704 353 bekannt gewordenen Drehgeber besteht der Stator aus einer äußeren, über einen Ringkern gewickelten Toroidwicklung mit drei Anzapfungen zur Bildung eines 3-Phasensystems. Innerhalb dieser Signalspule ist in konzentrischer Anordnung eine als Luftspule ausgebildete Erregerspule mit gerader Zylinderwicklung vorgesehen. Innerhalb dieser Spulenanordnung ist eine Taumelscheibe aus Weicheisen drehbar auf der Achse eines Magnetkompaß gelagert.

Ohne Weicheisenscheibe würde theoretisch keine Spannung aus der mit Wechselspannung gespeisten Erregerspule in der Signalspule induziert, da deren Wicklungen und Feldlinien orthogonal stehen. Je nach Lage der Taumelscheibe wird jedoch lokal ein von Null verschiedener Gegeninduktionskoeffizient vorhanden sein, sodaß an den Ausgängen des 3-Phasensystems drei Wechselspannungen auftreten, welchen im vorliegenden Fall einem Drehmelder zugeführt werden.

Aus den Ausgangsspannungen läßt sich jedoch auch rechnerisch der jeweilige Verdrehwinkel des Rotors berechnen, wie dies z.B. in der DE—A—34 32 395, allerdings für einen Drehgeber mit einem die Erregerspule tragenden Rotor, beschrieben ist.

Der bekannte Drehgeber weist zwar gegenüber anderen bekannten Lösungen, die — wie oben erwähnt — einen Rotor mit einer Erregerwicklung besitzen, den Vorteil eines einfach aufgebauten und leichten Rotors geringer Massenträgheit auf, doch führt die Verwendung eines Ringkernes mit Toroidwicklung zu hohen Herstellungskosten. Überdies ist die lokale Kopplung zwischen den beiden Spulen nur sehr schwach, sodaß zur Erzielung genügend großer Ausgangssignale eine verhältnismäßig hohe Erregerleistung erforderlich ist.

Aus der FR—A—1 111 737 ist ein Drehgeber der eingangs genannten Art bekannt geworden. Hier liegt der Rotor zwischen einer inneren und einer äußeren Spule und es kommen zwei Luftspalte, nämlich ein innerer und ein äußerer zur Wirkung, wodurch sich ein kritischer und voluminöser mechanischer Aufbau ergibt.

Die US—A—4 551 699 beschreibt einen Differentialtransformator mit einer Erregerspule und von dieser getrennte Sensorspulen, die allerdings zum Teil als schräggewickelte Spulen bezeichnet werden müssen. Aus dem Aufbau geht hervor, daß die bekannte Anordnung sicher toleranzempfindlich bezüglich axialer oder radialer Verschiebungen des Rotors ist. Weiters ist die Änderung der Kopplung in Abhängigkeit von dem Drehwinkel gering, da nur ein kleiner Teil des Rotors für die Flußänderung verantwortlich ist. Ein äußerer Mantel ist nicht vorgesehen.

Bei der Anordnung nach der FR—A—453 315 verläuft der gleichfalls spulenlose Rotor innerhalb einer Kombination zweier Spulen, von denen eine die Erregerspule und die andere die unterteilte Signalspule ist. Allerdings werden bei dieser alten Konstruktion in gleicher Weise wie bei elektrischen Maschinen in Nuten eingelegte Wicklungen verwendet, was zu einem entsprechend kompliziert geformten Stator und einer äußerst aufwendingen Herstellung führt. Man sieht weiters, daß der äußere Kern (Mantel) unbedingt Polschuhe benötigt, da diese den Leitstücken zugeordnet sind.

Aus der US—A—2 866 913 geht ein Drehgeber hervor, der ein innerhalb der Pole eines Stators rotierendes Zahnrad besitzt. Die Pole des Stators sind je mit Erreger- und Sensorwicklungen bewickelt. Der Aufbau dieses Drehgebers ist äußerst aufwendig und dementsprechend teuer in der Herstellung.

Die EP—A2—214 114 der Anmelderin zeigt zwar einen Drehgeber mit Schrägwickelspule, doch wird hier ein Rotor mit Wicklung verwendet, was unter anderem die Notwendigkeit der Verwendung von Schleifringen oder eines Drehtransformators mit sich bringt: Auch die konzentrische Anordnung zweier Spulen geht aus diesem Dokument nicht hervor.

Eine Aufgabe der Erfindung liegt in der Schaffung eines Drehgebers, dessen Aufbau einerseits eine einfache und billige Fertigung erlaubt und der andererseits die zur Erzielung einer hohen Auflösung und Reproduzierbarkeit erforderliche Präzision gewährleisten kann.

Diese Aufgabe wird mit einem Drehgeber nach Anspruch 1 gelost.

Die erfindungsgemäße Lösung gestattet die Verwendung handelsüblicher Schrägwickelspulen, die im Zusammenhang mit Gleichstrommaschinen z.B. aus der DE—A—22 61 236 oder aus der DE—A—29 31 724 bekannt geworden sind. Solche Spulen können mit hoher Genauigkeit und preisgünstig auf Wickelmaschinen vollautomatisch hergestellt werden. Da die Ebene jeder Spulenwicklung gegen die radiale Feldrichtung geneigt ist, ergibt sich zwangsläufig ein sinusförmiger Signalverlauf, der auch durch das gegenpolige Zusammenschalten der je gegenüberliegenden Einzelwicklungen begünstigt wird. Wegen der Verwendung eines spulenlosen Rotors entfallen die mit der Anspeisung der Rotorwicklung verbundenen Probleme und auch die zylindrische Erregerspule kann automatisch gewickelt werden. Der Mantel aus magnetisch leitfähigem Material führt zu einer guten Feldlinienkonzentration, die nur eine geringe Erregerleistung erfordert.

Ein Drehgeber nach der Erfindung mit einem Rotor 2, dessen Leitstück zumindest zwei längs einer Zylinderfläche gebogene Lappen 12, 13 aus Blech aufweisen, die sich von zwei in Achsrichtung gegeneinander versetzten Blechringen 10, 11 aus je in Richtung des anderen Ringes erstrecken, bei welchem der Mantel 7 an seinen beiden Enden die Blechringe 10 11 des Rotors 2 konzentrisch umfassende polringe 8, aufweist, bietet den Vorteil, daß unerwünschte, vor allem den Wirkungsgrad herabsetzende Streufelder sehr klein gehalten werden können.

Wenn der Mantel elektrisch leitfähig ist, ergibt sich als zusätzlicher Vorteil, daß auch axiale Wechselfelder, die z.B. von einem mit dem Drehgeber verbundenen Schrittmotor herrühren, stark abgeschwächt werden.

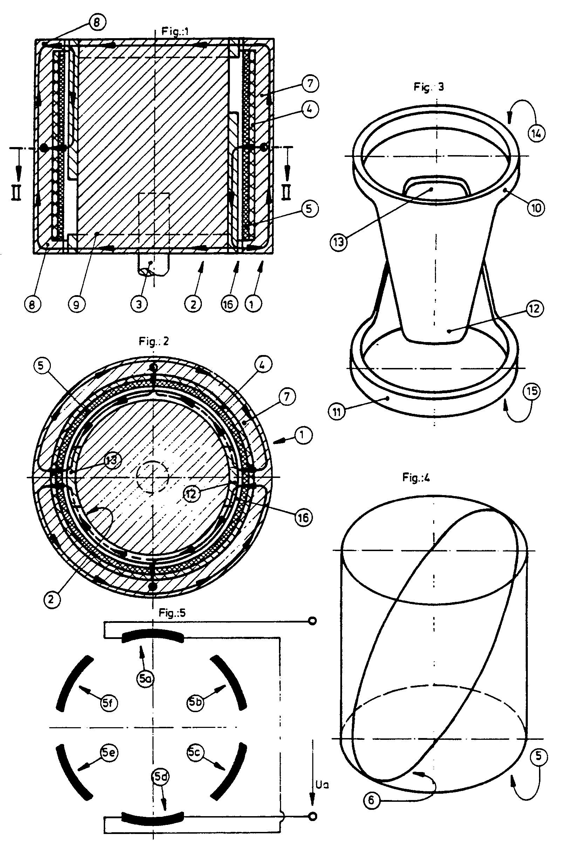

Die Erfindung samt ihren weiteren Vorteilen ist im folgenden an Hand eines Ausführungsbeispiels näher erläutert, das in der Zeichnung veranschaulicht ist. In dieser zeigen Fig. 1 einen Drehgeber nach der Erfindung in einem Achsenschnitt, Fig. 2 einen Schnitt nach der Linie II—II der Fig. 1, Fig. 3 die Leitstücke des Rotors in schaubildlicher, schematischer Darstellung, Fig. 4 in schaubildlicher schematischer Darstellung die Signalspule mit einer Windung einer Signalwicklung und Fig, 5 die Zusammenschaltung von Einzelwicklungen der Signalspule.

Gemäß Fig. 1 besteht der Drehgeber nach der Erfindung im wesentlichen aus einem Stator 1 und aus einem Rotor 2, der mit einer Welle 3, z.B. mit der Welle eines nicht dargestellten Schrittmotors verbunden ist, dessen jeweiliger Verdrehungswinkel angezeigt werden soll. Der Rotor 2 kann eine eigene Lagerung aufweisen oder frei auf der Welle 3 sitzen, die an anderer Stelle, außerhalb des Drehgebers gelagert ist.

Der Stator 1 besitzt zwei konzentrisch zueinander liegende Zylinderspulen, nämlich eine äußere Erregerspule 4 mit einer geraden Wicklung und eine innere Signalspule 5 mit Schrägwicklungen. Im vorliegenden Beispiel sind sechs, je um 60° versetzte, schräg gewickelte Einzelwicklungen 5a, b, c, d, e, f vorgesehen, die schematisch in Fig. 5 dargestellt sind. In Fig. 4 ist eine einzige Windung 6 einer der Einzelwicklungen 5 a bis f dargestellt. Jede der Einzelwicklungen erstreckt sich — in einem Querschnitt der Signalspule 5 gesehen — über 60°, wobei allerdings zu beachten ist, daß sich wegen der schrägen Wicklungsweise tatsächlich jede Windung jeder Einzelwicklung 5 a bis f in Draufsicht, also in Richtung der Spulenachse gesehen, über 360° erstreckt.

Wenngleich vorliegendenfalls die Signalspule 5 innerhalb der Erregerspule 4 angeordnet ist, können beide Spulen ebensogut vertauscht werden, sodaß die Erregerspule 4 innen liegt.

Beiden Spulen 4, 5 ist außen ein zylindrischer Mantel 7 aus magnetisch leitfähigem Material zugeordnet. An seinen beiden Enden ist der Mantel mit Polringen 8 versehen. Wie ersichtlich, liegen beide Spulen 4, 5 an der Innenfläche des Mantels 7 und so zwischen den Polringen 8, daß die Innenfläche der Signalspule 5 mit den Innenflächen der Polringe 8 fluchtet und sich eine durchgehende zylindrische Innenfläche des Stators 1 ergibt. Der Mantel 7 kann aus Ferrit, Dynamoblech od.dgl. hergestellt sein.

Der Rotor 2 besteht aus einem nicht ferromagnetischen, z.B. aus Kunststoff bestehenden Träger 9, der auf der Welle 3 sitzt.

Auf dem Träger 9 sind zwei Blechstreifen der in Fig. 3 dargestellten Art befestigt, z.B. aufgeklebt, die aus zwei in Achsrichtung gegeneinander versetzten Blechringen 10, 11 bestehen, von welchen sich, um 180° gegeneinander versetzt, zwei einstückig mit den Ringen 10, 11 ausgebildete, längs einer Zylinderfläche gebogene Lappen 12, 13 je in Richtung des anderen Ringes erstrecken. Die Ringe 10, 11 mit den zugehörigen Lappen 12, 13 bilden Leitstücke 14, 15 für das magnetische Feld und sie bestehen aus magnetisch leitfähigem Material, z.B. aus Weicheisenblech. Der Rotor 2 kann innerhalb des Stators 1 unter Belassung eines Luftspaltes 16 rotieren.

Im Betrieb wird die Erregerspule 4 an eine niederfrequente Wechselspannung gelegt, wodurch ein im wesentlichen axialer Wechselfluß entsteht. Ohne Vorhandensein der Leitstücke würde in jeder der schräg gewickelten Einzelwicklungen eine Wechselspannung gleichen Betrages und gleicher Phase induziert werden, sodaß an den Ausgangsklemmen zweier gegenphasig in Serie geschalteter Wicklungen (z.B. 5a, 5d in Fig. 5) keine Spannung vorliegt. Durch die Leitstücke 14, 15, wird der magnetische Wechselfluß jedoch an zwei diametral gegenüberliegenden Stellen in radialer Richtung umgelenkt (siehe Fig. 1 und 2). Hiedurch werden in gegenüberliegenden Teilwicklungen, z.B, den Wicklungen 5a und 5d, gegenphasige Wechselspannungen induziert, die somit — wegen der gegenphasigen Zusammenschaltung dieser Wicklungen — an den Ausgangsklemmen mit doppeltem Betrag auftreten. In Fig. 5 ist die Klemmenspannung der Wicklungen 5a + 5d mit $u_a$ bezeichnet. Analog ergeben sich die nicht eingezeichneten Ausgangsspannungen $u_b$ für die Wicklungen 5b + 5e und $u_c$ für die Wicklungen 5c + 5f.

Es ergeben sich demnach drei Ausgangsspannungen

$$u_a = u_0 \cos(\omega t + \varphi) \sum_{n=1}^{k} \sin\left(\alpha + \frac{2\pi}{3} \cdot \frac{n-1}{k}\right)$$

$$u_b = u_0 \cos(\omega t + \varphi) \sum_{n=1}^{k} \sin\left(\alpha + \frac{2\pi}{3} \cdot \frac{n-1}{k} + \frac{2\pi}{3}\right)$$

$$u_c = u_0 \cos(\omega t + \varphi) \sum_{n=1}^{k} \sin\left(\alpha + \frac{2\pi}{3} \cdot \frac{n-1}{k} + \frac{4\pi}{3}\right)$$

worin

$u_o$ . . . Maximalwert des induzierten Signals
$\alpha$ . . . Verdrehungswinkel des Rotors
$\varphi$ . . . Rotor-Stator-Phasenverschiebung
$\omega$ . . . Kreisfrequenz der Erregerspannung
$k$ . . . Anzahl der Windungen je Wicklung
$n$ . . . Summationsindex

Es ist ersichtlich, daß der Winkel $\alpha$ aus zwei der drei Signalspannungen $u_a$, $u_b$, $u_c$ berechenbar ist, doch ist es zweckmäßig, wenn man auf alle drei Signalspannungen zurückgreifen kann, da sich dann z.B. die Division durch nullnahe Werte vermeiden läßt.

Die Berechnung des Winkels $\alpha$ kann in bekannten Schaltungen in analoger oder digitaler Weise erfolgen und bildet nicht Gegenstand der vorliegenden Erfindung.

Jedenfalls können auch bloß zwei Signalwicklungen bzw. Paare von Signalwicklungen vorgesehen sein, die dann je um 90° gegeneinander versetzt sind.

Um axiale Wechselfelder, die z.B. von einem auf der Welle 3 sitzenden Schrittmotor stammen, zu unterdrücken, kann man den magnetisch leitfähigen Mantel 7 aus einem Material herstellen, das außerdem elektrisch leitfähig ist. Da der Luftspalt 16 zwischen dem Rotor 2 und der Innenfläche der Spule 5 klein sein soll, kann es auch empfehlenswert sein, die Innenfläche der Signalspule 5 mit einer harten Schutzschicht (nicht dargestellt) zu versehen, um bei einem allfälligen Schleifen der Leitstücke 14, 15 an der Spule 5 eine Beschädigung der Wicklung zu vermeiden.

Wegen der hohen Genauigkeit, mit der sich Schrägwickelspulen ausführen lassen, erhält man für die lageabhängige Funktion der Signalspannungen tatsächlich eine Sinusfunktion, sodaß die Berechnung des Lagewinkels $\alpha$ mit Hilfe einfacher Algorithmen ohne besondere Korrekturen möglich ist. Darüber hinaus ist eine Zylinderspule mit Schrägwicklung vollautomatisch und daher kostengünstig herstellbar und es ist eine gute Linearität und Reproduzierbarkeit erzielbar.

Es wurde bereits erwähnt, daß die Erregerspule 4 und die Signalspule 5 lagemäßig vertauschbar sindEs ist weiters auch möglich, den Mantel aus leitfähigem Material an der Innenseite der Spulen anzuordnen, wobei dann Leitstücke des Rotors die Spulen von außen umgreifen. Die Leitstücke können auch andere Gestalt aufweisen, z.B. stabförmig längs einer Zylindererzeugenden verlaufen und es ist — bei verschlechtertem Wirkungsgrad — auch denkbar, statt je einem Paar von Leitstücken bloß ein einziges Leitstück zu verwenden.

**Patentansprüche**

1. Drehgeber mit einem Stator, der eine Signalspule mit zumindest zwei, um vorgegebene Winkel gegeneinander versetzten Signalwicklungen sowie eine zu der Signalspule konzentrisch angeordnete, zylindrische Erregerspule mit gerader Erregerwicklung aufweist, wobei zumindest einer der Spulen ein Kern aus magnetisch leitfähigem Material zugeordnet ist, und mit einem Rotor, der zumindest ein Paar einander diametral gegenüberliegender Leitstücke aus magnetisch leitfähigem Material aufweist, dadurch gekennzeichnet, daß die Signalspule (5) als Zylinderspule mit Schrägwicklungen ausgebildet ist, der Kern als die Spulen (4, 5) an ihren Außenflächen umgebender Mantel (7) ausgebildet ist und die Leitstücke (14, 15) des Rotors (2) innerhalb der Spulen (4, 5) unter Belassung eines Luftspaltes liegen, wobei die Signalspule 2n, vorzugsweise mit $n = 3$, Einzelwicklungen aufweist und je zwei gegenüberliegende Einzelwicklungen (5a, 5d) zu einer Signalwicklung gegenpolig in Serie geschaltet sind.

2. Drehgeber nach Anspruch 1 mit einem Rotor (2), dessen Leitstücke zumindest zwei längs einer Zylinderfläche gebogene Lappen (12, 13) aus Blech aufweisen, die sich von zwei in Achsrichtung gegeneinander versetzten Blechringen (10, 11) aus je in Richtung des anderen Ringes erstrecken, dadurch gekennzeichnet, daß der Mantel (7) an seinen beiden Enden die Blechringe (10, 11) des Rotors (2) konzentrisch umfassende Polringe (8) aufweist.

3. Drehgeber nach Anspruch 1 oder 2, dadurch gekennzeichnet, daß der Mantel (7) elektrisch leitfähig ist.

**Revendications**

1. Résolveur comportant un stator, qui possède une bobine de transmission du signal, comportant au moins deux enroulements de transmission du signal décalés d'un angle prédéterminé l'un par rapport à l'autre, ainsi qu'une bobine cylindrique d'excitation disposée concentriquement par rapport à la bobine de transmission du signal et possédant un enroulement d'excitation rectiligne, un noyau réalisé en un matériau magnétiquement conducteur étant associé au moins à l'une des bobines, et un rotor, qui possède au moins un couple d'éléments conducteurs diamétralement opposés, réalisés en un matériau magnétiquement conducteur, caractérisé en ce que la bobine (5) de transmission du signal est réalisée sous la forme d'une bobine cylindrique comportant des enroulements obliques, que le noyau est réalisé sous la forme d'une enveloppe (7) entourant les bobines (4, 5) sur leurs faces extérieures et que les éléments conducteurs (14, 15) du rotor (2) sont situés à l'intérieur des bobines (4, 5) tout en laissant subsister un entrefer, tandis que la bobine de transmission du signal possède 2n enroulements individuels, de préférence avec n = 3, et que respectivement deux enroulements individuels opposés (5a, 5d) sont branchés en série, avec des polarités opposées, avec un enroulement de transmission du signal.

2. Résolveur selon la revendication 1, comportant un rotor (2), dont les éléments conducteurs possèdent au moins deux languettes en tôle (12, 13), qui sont recourbées le long d'une surface cylindrique et s'étendent, à partir de deux anneaux en tôle (10, 11) décalés l'un par rapport à l'autre dans la direction axiale, respectivement en direction de l'autre anneau, caractérisé en ce que l'enveloppe (7) comporte, à ses deux extrémités, des bagues polaires (8) qui entourent concentriquement les anneaux en tôle (10, 11) du rotor (2).

3. Résolveur selon la revendication 1 ou 2, caractérisé en ce que l'enveloppe (7) est électriquement conductrice.

## Claims

1. Rotary transmitter with a stator including a signal coil with at least two signal windings, which are offset relative to one another at a predetermined angle, as well as a cylindrical exciter coil, which is arranged concentrically relative to the signal coil, with straight exciter winding, in which respect a core of magnetically conductive material is associated with at least one of the coils, and with a rotor which has at least one pair of conducting members of magnetically conductive material disposed diametrically relative to each other, characterised in that the signal coil (5) is in the form of a cylinder coil (5) with cross windings, in that the core is in the form of a cover (7) which surrounds the external surfaces (7) of the coils (4, 5), and in that the conducting members (14, 15) of the rotor (2) are disposed within the coils (4, 5) under retention of an air gap, whereby the signal coil 2n, preferably with n = 3, has single windings and each two opposite individual windings (5a, 5d) are arranged to be in series opposite pole signal windings.

2. Rotary transmitter according to claim 1 with a rotor (2), the conducing members of which have at least two flaps (12, 13) of sheet metal bent along a cylindrical surface, which flaps respectively extend from two metal rings (10, 11), which are offset relative to each other in the axial direction, in the direction of the other ring, characterised in that the cover (7) has pole rings (8) at both its ends which concentrically embrace the metal rings (10, 11) of the rotor (2).

3. Rotary transmitter according to claim 1 or 2, characterised in that the cover (7) is electrically conductive.

Fig.:1

Fig.: 3

Fig.: 2

Fig.:4

Fig.:5

Ua